# EUROPÄISCHE PATENTANMELDUNG

(11) **EP 3 546 273 A1**
(43) Veröffentlichungstag der Anmeldung: **02.10.2019**
(21) Anmeldenummer: 18163960.0
(22) Anmeldetag: 26.03.2018
(51) Int. Cl.: B60L 11/18

(54) **ÜBERTRAGEN VON ELEKTRISCHER ENERGIE ZWISCHEN EINEM MIT EINER LADESTATION ELEKTRISCH GEKOPPELTEN KRAFTFAHRZEUG UND DER LADESTATION**

(71) Anmelder: Siemens Aktiengesellschaft, 80333 München (DE)
(72) Erfinder: Linzmaier, Klaus-Peter, 73650 Winterbach (DE)

(57) **Zusammenfassung**

Die Erfindung betrifft ein Verfahren zum Übertragen von elektrischer Energie zwischen einer Ladestation (10) und einem mit der Ladestation (10) elektrisch gekoppelten Kraftfahrzeug (12), wobei:
- das Kraftfahrzeug (12) mittels eines wenigstens zwei elektrische Leitungen (24, 26) aufweisenden elektrischen Ladeanschlusskabels (18) mit der Ladestation (10) gekoppelt wird,
- eine Kommunikationsverbindung zwischen der Ladestation (10) und dem Kraftfahrzeug (12) hergestellt wird, und
- das Übertragen der elektrischen Energie durch die Ladestation (10) abhängig von vom Kraftfahrzeug (12) an die Ladestation (10) übermittelten Energiespeicherdaten eingestellt wird.

Erfindungsgemäß wird die Kommunikationsverbindung mittels wenigstens eines ladestationsseitigen und wenigstens eines kraftfahrzeugseitigen Kommunikationsadapters (28, 30) zumindest teilweise über die wenigstens zwei elektrischen Leitungen (24, 26) des elektrischen Ladeanschlusskabels (18) hergestellt.

## Beschreibung

Die Erfindung betrifft eine Steuereinheit zum Steuern einer Ladeeinheit, die dem Übertragen von elektrischer Energie an ein mit der Ladeeinheit über ein wenigstens zwei elektrische Leitungen aufweisendes Ladeanschlusskabel koppelbares Kraftfahrzeug dient, wobei die Steuereinheit eine Kommunikationsschnittstelle zum kommunikationstechnischen Verbinden mit der Ladeeinheit aufweist und ferner ausgebildet ist, eine Kommunikationsverbindung zum Kraftfahrzeug herzustellen und das Übertragen von elektrischer Energie durch die Ladeeinheit abhängig von empfangenen Energiespeicherdaten des Kraftfahrzeugs einzustellen. Die Erfindung betrifft ferner eine Ladestation zum Übertragen von elektrischer Energie zwischen der Ladestation und einem mit der Ladestation elektrisch koppelbaren Kraftfahrzeug, mit einer Ladeeinheit zum Übertragen der elektrischen Energie, einer mit der Ladeeinheit kommunikationstechnisch gekoppelten Steuereinheit, wobei die Steuereinheit ausgebildet ist, eine Kommunikationsverbindung zum Kraftfahrzeug herzustellen und das Übertragen von elektrischer Energie durch die Ladeeinheit abhängig von empfangenen Energiespeicherdaten des Kraftfahrzeugs einzustellen, und einem mit der Ladeeinheit elektrisch gekoppelten elektrischen Ladeanschlusskabel, das wenigstens zwei elektrische Leitungen zum elektrischen Koppeln des Kraftfahrzeugs aufweist. Weiterhin betrifft die Erfindung einen Ladeabgang für eine Ladestation, wobei der Ladeabgang räumlich entfernt von einer Ladeeinheit der Ladestation zum Übertragen der elektrischen Energie anordbar ist und zum elektrischen Koppeln eines Kraftfahrzeugs ausgebildet ist, wobei der Ladeabgang aufweist: eine mit der Ladeeinheit kommunikationstechnisch gekoppelte Steuereinheit, wobei die Steuereinheit ausgebildet ist, eine Kommunikationsverbindung zum Kraftfahrzeug herzustellen und das Übertragen von elektrischer Energie durch die Ladeeinheit abhängig von empfangenen Energiespeicherdaten des Kraftfahrzeugs einzustellen, und ein mit dem Ladeabgang gekoppeltes elektrisches Ladeanschlusskabel, das wenigstens zwei elektrische Leitungen zum elektrischen Koppeln des Kraftfahrzeugs aufweist. Weiterhin betrifft die Erfindung ein Kraftfahrzeug mit einem elektrischen Energiespeicher, einer mit dem elektrischen Energiespeicher elektrisch gekoppelten Ladeanschlusseinheit mit wenigstens zwei Anschlusskontakten, wobei die Ladeanschlusseinheit zum elektrischen Anschließen eines elektrischen Ladeanschlusskabels einer Ladestation mit wenigstens zwei elektrischen Leitungen zum Übertragen von elektrischer Energie zwischen der Ladestation und dem Kraftfahrzeug ausgebildet ist, und einer Fahrzeugsteuereinheit, die ausgebildet ist, eine Kommunikationsverbindung zur Ladestation herzustellen und Energiespeicherdaten des elektrischen Energiespeichers über die Kommunikationsverbindung an die Ladestation zu übermitteln, um das Übertragen der elektrischen Energie abhängig von den Energiespeicherdaten einzustellen. Ferner betrifft die Erfindung eine Ladestation, an der ein Kraftfahrzeug elektrisch angeschlossen ist. Schließlich betrifft die Erfindung auch ein Verfahren zum Übertragen von elektrischer Energie zwischen einer Ladestation und einem mit der Ladestation elektrisch gekoppelten Kraftfahrzeug, wobei das Kraftfahrzeug mittels eines wenigstens zwei elektrische Leitungen aufweisenden elektrischen Ladeanschlusskabels mit der Ladestation gekoppelt wird, eine Kommunikationsverbindung zwischen der Ladestation und dem Kraftfahrzeug hergestellt wird, und das Übertragen der elektrischen Energie durch die Ladestation abhängig von vom Kraftfahrzeug an die Ladestation übermittelten Energiespeicherdaten eingestellt wird.

Kraftfahrzeuge sind insbesondere Landfahrzeuge, die durch Maschinenkraft im bestimmungsgemäßen Fahrbetrieb betrieben werden können, ohne an einen Fahrweg gebunden zu sein. Das Kraftfahrzeug ist vorzugsweise ein Kraftwagen, insbesondere ein Personenkraftwagen.

Kraftfahrzeuge umfassen vorzugsweise elektrisch antreibbare Kraftfahrzeuge, welche Kraftfahrzeuge sind, die zumindest teilweise unter Nutzung von elektrischer Energie im bestimmungsgemäßen Fahrbetrieb angetrieben werden können. Zu diesem Zweck ist der elektrische Energiespeicher vorgesehen, der eine elektrische Antriebseinrichtung des Kraftfahrzeugs für den bestimmungsgemäßen Fahrbetrieb mit elektrischer Energie versorgt. Während des Fahrbetriebs wird der elektrische Energiespeicher entladen, sodass er regelmäßig wieder aufgeladen werden muss, damit der Fahrbetrieb fortgeführt werden kann.

Das Aufladen des Energiespeichers des Kraftfahrzeugs erfolgt durch Energiezuführung von einer dafür ausgebildeten Ladestation, die in der Regel ihre elektrische Energie von einer elektrischen Energiequelle bezieht, die beispielsweise das öffentliche Energieversorgungsnetz oder dergleichen sein kann. Die Energiequelle kann darüber hinaus jedoch auch eine Solaranlage, eine Turbine, ein Windrad und/oder dergleichen umfassen. Über eine energietechnische Kopplung wird die Energie von der Ladestation an das Kraftfahrzeug und hier insbesondere an eine mit dem elektrischen Energiespeicher elektrisch gekoppelte Ladeanschlusseinheit zugeführt.

Der elektrische Energiespeicher des Kraftfahrzeugs ist zu diesem Zweck reversibel auf- beziehungsweise entladbar und ist üblicherweise nach Art eines Akkumulators ausgebildet. Für elektrisch antreibbare Kraftfahrzeuge wird heutzutage als elektrischer Energiespeicher in der Regel ein Akkumulator nach Art einer Hochvoltbatterie eingesetzt, die häufig als Lithium-Ion-Batterie ausgebildet ist.

Ein elektrisch antreibbares Kraftfahrzeug ist somit insbesondere ein Elektrofahrzeug oder ein Hybridfahrzeug. Ein Hybridfahrzeug weist gegenüber einem Elektrofahrzeug zusätzlich eine nicht elektrisch betriebene Antriebseinrichtung auf, die häufig durch eine Verbrennungskraftmaschine gebildet sein kann, die ebenfalls für den bestimmungsgemäßen Fahrbetrieb genutzt werden kann, um eine entsprechende Antriebswirkung erzielen zu können. Bei dem Hybridfahrzeug können die elektrische Antriebseinrichtung sowie die nicht elektrische Antriebseinrichtung auch teilweise parallel im bestimmungsgemäßen Fahrbetrieb eingesetzt werden.

Steuereinheiten, Ladestationen, Kraftfahrzeuge sowie auch Verfahren zum Zuführen beziehungsweise Abführen von elektrischer Energie, insbesondere bei elektrisch antreibbaren Kraftfahrzeugen, sind dem Grunde nach im Stand der Technik umfänglich bekannt, sodass es eines gesonderten druckschriftlichen Nachweises hierfür nicht bedarf. Das Kraftfahrzeug weist die Ladeanschlusseinheit auf, die dazu dient, ein elektrisches Ladeanschlusskabel der Ladestation anschließen zu können. Über das Ladeanschlusskabel kann dann dem Kraftfahrzeug von der Ladestation elektrische Energie zugeführt beziehungsweise abgeführt werden. Es handelt sich hierbei also um eine leitungsgebundene elektrische Energiekopplung.

Die Ladeanschlusseinheit kann zu diesem Zweck einen, insbesondere lösbaren, Steckverbinder umfassen, mittels dem eine elektromechanische Kopplung mit der Ladestation hergestellt werden kann. Beispielsweise kann vorgesehen sein, dass das Kraftfahrzeug im Bereich der Ladestation abgestellt wird und die Ladestation über die Ladeanschlussleitung mittels eines entsprechend komplementär ausgebildeten Steckverbinders elektromechanisch an die Ladeanschlusseinheit des Kraftfahrzeugs angeschlossen wird. Dadurch kann dem Kraftfahrzeug elektrische Energie von der Ladestation zugeführt werden. Die Energie wird somit von einer kraftfahrzeugexternen, elektrischen Energiequelle, nämlich der Ladestation oder einer an die Ladestation angeschlossenen Energiequelle, bereitgestellt, beispielsweise über das zuvor genannte Energieversorgungsnetz.

Häufig umfasst die Ladestation auch einen getakteten Energiewandler, mittels dem das Ladeanschlusskabel der Ladestation elektrisch gekoppelt ist. Der getaktete Energiewandler, häufig nach Art eines DC/DC-Wandlers und/oder auch eines gesteuerten Gleichrichters ausgebildet, dient dazu, die von der Energiequelle der Ladestation zugeführte elektrische Energie in geeigneter Weise für den elektrischen Energiespeicher des Kraftfahrzeugs zu wandeln. Zu diesem Zweck ist üblicherweise die Steuereinheit der Ladestation vorgesehen, die an den Energiewandler angeschlossen ist und den Energiewandler unter anderem auch abhängig von Energiespeicherdaten des elektrischen Energiespeichers des Kraftfahrzeugs, beispielsweise einem Ladungszustand, auch State-of-Charge (SOC) genannt, steuert.

Die Ladestation ist üblicherweise ortsfest angeordnet. Neben dem Anschluss der Ladestation an das öffentliche Energieversorgungsnetz kann alternativ oder ergänzend auch eine lokale Energiequelle an die Ladestation angeschlossen sein, um die elektrische Energie bereitstellen zu können. Die lokale Energiequelle kann beispielsweise durch eine oder mehrere Windräder, Solarzellen, Brennstoffzellen, aber auch einen mittels einer Verbrennungskraftmaschine angetriebenen Generator und/oder dergleichen gebildet sein.

Die Ladestation weist üblicherweise die Ladeeinheit auf, mittels der die elektrische Energie bereitgestellt wird. Die Ladeeinheit bezieht ihre elektrische Energie von der elektrischen Energiequelle, an der die Ladestation angeschlossen ist. Die Ladeeinheit ist mit der Steuereinheit kommunikationstechnisch gekoppelt, sodass Betriebszustände der Ladeeinheit von der Ladeeinheit an die Steuereinheit übermittelt beziehungsweise Betriebszustände der Ladeeinheit gemäß von der Steuereinheit vorgegebenen Steuerbefehlen gesteuert werden können. Die Ladeeinheit ist an das elektrische Ladeanschlusskabel angeschlossen, mittels dem die elektromechanische Kopplung zum Kraftfahrzeug beziehungsweise elektrisch antreibbaren Kraftfahrzeug hergestellt werden kann. Die Verbindung des Ladeanschlusskabels mit dem Kraftfahrzeug ist somit eine lösbare Verbindung, weil sie im bestimmungsgemäßen Fahrbetrieb des Kraftfahrzeugs in der Regel nicht besteht, zumal die Ladestation üblicherweise ortsfest angeordnet ist.

Um den Ladevorgang möglichst ungestört ausführen zu können, ist es sinnvoll, dass eine Kommunikation zwischen dem Kraftfahrzeug, welches an die Ladestation mittels des Ladeanschlusskabels angeschlossen ist, und der Ladestation bereitgestellt wird. So hat es sich gezeigt, dass es sinnvoll ist, wenn kraftfahrzeugseitig die Information verfügbar ist, welche Ladeleistung die Ladestation aktuell zur Verfügung zu stellen vermag. Zugleich ist es ladestationsseitig zum Beispiel sinnvoll zu wissen, welchen Ladungszustand der kraftfahrzeugseitige Energiespeicher aktuell hat. Ferner ist es sinnvoll für die Ladestation zu wissen, mit welcher elektrischen Leistung der kraftfahrzeugseitige Energiespeicher beaufschlagt werden kann. Ist ein separater Ladeabgang bei der Ladestation vorgesehen, so kann es zum Beispiel sinnvoll sein zu wissen, welchen Zustand der Ladeabgang hat, ob beispielsweise ein Kraftfahrzeug angeschlossen ist, ob eine Lüftung aktiviert ist und/oder dergleichen.

Im Stand der Technik ist es zu diesem Zweck üblich, dass eine Pilotleitung vorgesehen ist, die eine entsprechende Kommunikationsverbindung zwischen der Ladestation und dem Kraftfahrzeug beziehungsweise dem Ladeabgang ermöglicht. Beispielsweise kann die Pilotanschlussleitung in das Ladeanschlusskabel integriert angeordnet sein, sodass keine separate Leitung und auch keine separate Steckverbindung gehandhabt zu werden braucht. Die Kommunikation, die mittels der Pilotleitung realisiert werden kann, ist vorliegend von der Normung erfasst, und zwar hier insbesondere der DIN EN 61 851. Die Pilotleitung ist vorzugsweise als zweipolige Leitung ausgebildet und sowohl kraftfahrzeugseitig beziehungsweise ladeabgangsseitig als auch ladestationsseitig in gemäß der Norm vorgegebener Weise angeschlossen. Die Leitung kann aus einem einzelnen Pilotleiter und einem elektrischen Bezugspotential wie dem Erdpotential gebildet sein.

Es kann auch vorgesehen sein, dass die Ladestation einen von der Ladeeinheit räumlich entfernt angeordneten Ladeabgang aufweist, mit dem das Kraftfahrzeug zum Zuführen von elektrischer Energie energietechnisch gekoppelt wird. Dies kann mittels einer separaten Verbindungsleitung zwischen dem Ladeabgang und dem Kraftfahrzeug realisiert sein. Das Ladeanschlusskabel dient hier dazu, die Ladeeinheit der Ladestation mit dem Ladeabgang elektrisch zu verbinden. Der Ladeabgang kann durch ein eigenes Gerät wie beispielsweise eine Säule oder dergleichen gebildet sein.

Auch wenn sich das vorgenannte System hinsichtlich der Funktionalität der Pilotleitung bewährt hat, so zeigen sich dennoch Nachteile. Insbesondere, wenn das Ladeanschlusskabel eine vorgegebene maximale Länge überschreitet, können Störungen hinsichtlich der Kommunikation auftreten, und zwar sowohl kraftfahrzeugseitig als auch ladeabgangsseitig. Funktionsstörungen insbesondere beim bestimmungsgemäßen Aufladen des elektrischen Energiespeichers des Kraftfahrzeugs durch die Ladestation können die Folge sein.

Weiterhin hat sich gezeigt, dass insbesondere ein erdungsbezogener Betrieb der Pilotleitung lediglich eine geringe Störsicherheit ermöglicht. Die Reichweite in Bezug auf eine zuverlässige Kommunikation ist daher begrenzt.

Darüber hinaus ist zu beachten, dass bei einer Technologie, die auf dem Aufladen des elektrischen Energiespeichers mittels einer von der Ladestation bereitgestellten Gleichspannung als Ladespannung basiert, üblicherweise eine Systemaufteilung derart vorliegt, das kraftfahrzeugseitig im Wesentlichen lediglich der elektrische Energiespeicher angeordnet ist, wohingegen die Ladeeinheit einen geeigneten Energiewandler bereitstellt, der die Ladespannung bereitstellen kann und mittels dem der Ladevorgang des elektrischen Energiespeichers des Kraftfahrzeugs gesteuert werden kann. Durch diese Aufteilung des Systems besteht für die Realisierung der Funktionalität des Aufladens ein Bedarf, dass ladestationsseitig Energiespeicherdaten des elektrischen Energiespeichers zur Verfügung stehen, die relevanten Parametern beziehungsweise Zuständen des elektrischen Energiespeichers entsprechen. Derartige Parameter beziehungsweise Zustände können eine Temperatur des elektrischen Energiespeichers, ein Ladungszustand, eine maximale Ladeleistung, eine Bemessungsspannung, einen Ladestromsollwert und/oder dergleichen umfassen. Darüber hinaus kann Sicherheit verbessert werden, wenn ergänzende Kommunikationsinhalte definiert und zwischen der Ladestation und dem Kraftfahrzeug ausgetauscht werden können.

Für den sicheren Betrieb des Aufladevorgangs beziehungsweise auch eines etwaigen Entladevorgangs hat es sich insbesondere als zweckmäßig erwiesen, dass ladestationsseitig die Information zur Verfügung steht, ob die energietechnische Kopplung zuverlässig hergestellt ist. Ist die energietechnische Kopplung unterbrochen, ist vorzugsweise eine schnelle Unterbrechung der Ladespannung, insbesondere bei bestimmungswidrigem Trennen der energietechnischen Kopplung, vorgesehen.

Da bei Nutzung einer erdbezogenen Pilotleitung, insbesondere bei mehreren Ladestationen beziehungsweise Ladeabgängen in der Regel dieselbe Erdleitung als Bezugspotenzial genutzt wird, kommt es regelmäßig aufgrund der Ausbreitung der Kommunikationssignale unter Nutzung dieser Erdleitung häufig zu einem Übersprechen. Das kann dazu führen, dass die eindeutige Zuordnung zwischen dem Kraftfahrzeug und der Ladestation beziehungsweise dem Ladeabgang nicht mehr nachvollzogen werden kann. Dies kann gefährliche Zustände zur Folge haben.

Der Erfindung liegt die Aufgabe zugrunde, die Kommunikation zwischen der Ladestation beziehungsweise einem Ladeabgang und dem Kraftfahrzeug zu verbessern.

Als Lösung werden mit der Erfindung eine Ladestation, ein Ladeabgang, ein Kraftfahrzeug sowie ein Verfahren gemäß den unabhängigen Ansprüchen vorgeschlagen.

Vorteilhafte Weiterbildungen ergeben sich anhand von Merkmalen der abhängigen Ansprüche.

Bezüglich einer gattungsgemäßen Steuereinheit wird insbesondere vorgeschlagen, dass die Steuereinheit einen an die wenigstens zwei elektrischen Leitungen anschließbaren Kommunikationsadapter zum Herstellen der Kommunikationsverbindung zum Kraftfahrzeug über die wenigstens zwei elektrischen Leitungen aufweist.

Bezüglich einer gattungsgemäßen Ladestation wird insbesondere vorgeschlagen, dass die Steuereinheit gemäß der Erfindung ausgebildet ist.

Bezüglich eines gattungsgemäßen Ladeabgangs wird insbesondere vorgeschlagen, dass die Steuereinheit gemäß der Erfindung ausgebildet ist.

Kraftfahrzeugseitig wird insbesondere vorgeschlagen, dass das Kraftfahrzeug einen mit der Fahrzeugsteuereinheit kommunikationstechnisch gekoppelten und an die wenigstens zwei Anschlusskontakte angeschlossenen Kommunikationsadapter zum Herstellen der Kommunikationsverbindung zur Ladestation über die wenigsten zwei elektrischen Leitungen aufweist.

Verfahrensseitig wird ferner vorgeschlagen, dass die Kommunikationsverbindung mittels wenigstens eines ladestationsseitigen und wenigstens eines kraftfahrzeugseitigen Kommunikationsadapters zumindest teilweise über die wenigsten zwei elektrischen Leitungen des elektrischen Ladeanschlusskabels hergestellt wird.

Schließlich wird ferner vorgeschlagen, dass an eine erfindungsgemäße Ladestation ein Kraftfahrzeug gemäß der Erfindung zum Übertragen von elektrischer Energie zwischen der Ladestation und dem Kraftfahrzeug elektrisch angeschlossen ist.

Die Erfindung basiert auf dem Gedanken, die Pilotleitung, die im Stand der Technik zur Bereitstellung der Kommunikation zwischen dem Kraftfahrzeug und der Ladestation dient, vollständig zu einzusparen. Dadurch können auch die hiermit verbundenen Nachteile, insbesondere in Bezug auf die Zuverlässigkeit der Kommunikation und die Reichweite, vermieden werden. Die Erfindung basiert dabei auf dem Gedanken, die Kommunikation über die ohnedies bereits vorhandenen elektrischen Leitungen des Ladeanschlusskabels zu führen. Es sind also keine separaten Kommunikationsleitungen gemäß der Erfindung mehr erforderlich.

Die Kommunikation erfolgt bei der Erfindung dadurch, dass mittels der ladestationsseitig und kraftfahrzeugseitig vorgesehenen Kommunikationsadapter Kommunikationssignale auf die elektrischen Leitungen des Ladeanschlusskabels aufgegeben werden können, sodass das Ladeanschlusskabel nicht nur dazu genutzt werden kann, elektrische Energie von der Ladestation an das Kraftfahrzeug oder umgekehrt zu übertragen, sondern zugleich auch mittels der Kommunikationssignale eine Kommunikation über das gleiche Ladeanschlusskabel, insbesondere die elektrischen Leitungen des Ladeanschlusskabels zu ermöglichen. Dabei erlaubt es die Erfindung, dass die Kommunikationsadapter ladestationsseitig und kraftfahrzeugseitig dem Grunde nach im Wesentlichen gleich ausgebildet sein können. Es brauchen also keine unterschiedlichen Kommunikationsadapter vorgesehen zu sein. Gleichwohl können die Kommunikationsadapter je nach Bedarf jedoch auch unterschiedlich ausgebildet sein. Darüber hinaus können die Kommunikationsadapter Hilfsfunktionen bereitstellen, die die Kommunikation über die Leitungen des Ladeanschlusskabels verbessern oder eventuell auch erst ermöglichen. Zu diesem Zweck können die elektrischen Leitungen zumindest teilweise durch den Kommunikationsadapter durchgeschleift sein oder dergleichen. Dem Grunde nach reicht es für die Erfindung jedoch aus, wenn die Kommunikationsadapter die elektrischen Leitungen des Ladeanschlusskabels zumindest elektrisch kontaktieren. Anstelle der elektrischen Kontaktierung kann jedoch auch eine andere Art der Einkopplung beziehungsweise Auskopplung der Kommunikationssignale vorgesehen sein.

Die Erfindung benötigt für ihre Durchführung dem Grunde nach zumindest zwei elektrische Leitungen des Ladeanschlusskabels. Ist das Ladeanschlusskabel für eine Beaufschlagung mit einer Gleichspannung als Ladespannung ausgebildet, braucht es lediglich zwei elektrische Leitungen aufzuweisen. In diesem Fall können diese beiden elektrischen Leitungen durch die Kommunikationsadapter genutzt, beispielsweise kontaktiert werden, um die Kommunikationssignale über die elektrischen Leitungen zu übertragen.

Es ist jedoch auch möglich, dass das Ladeanschlusskabel mehr als zwei elektrische Leitungen aufweist, beispielsweise wenn die Ladespannung durch eine Wechselspannung, insbesondere eine mehrphasige Wechselspannung, besonders vorzugsweise eine dreiphasige Wechselspannung gebildet ist. In diesem Fall reicht es aus, wenn lediglich zwei der mehreren elektrischen Leitungen des Ladeanschlusskabels von den Kommunikationsadaptern genutzt beziehungsweise durch die Kommunikationsadapter kontaktiert werden. Dabei ist dann jedoch zu beachten, dass sowohl kraftfahrzeugseitig als auch ladestationsseitig jeweils vorzugsweise die gleichen elektrischen Leitungen des Ladeanschlusskabels kontaktiert werden beziehungsweise für die Übertragung der Kommunikationssignale genutzt werden. Dies kann durch Standardisierung oder dergleichen auch vorgegeben sein. Dem Grunde nach besteht natürlich auch die Möglichkeit, dass bei einer derartigen Konstellation die Kommunikationsadapter mehrere, vorzugsweise sämtliche der elektrischen Leitungen des Ladeanschlusskabels kontaktieren und dann ermitteln, auf welchen der elektrischen Leitungen die Kommunikationssignale übertragen werden sollen. Dies erhöht die Flexibilität der Erfindung.

Insbesondere kraftfahrzeugseitig meint "Kontaktieren" der elektrischen Leitungen des Ladeanschlusskabels durch den Kommunikationsadapter, dass die elektrischen Leitungen zumindest mittelbar kontaktiert werden. Mittelbares Kontaktieren meint dabei, das kraftfahrzeugseitig ein Steckverbinder vorgesehen sein kann, der entsprechend des anzuschließenden Ladeanschlusskabels für vorzugsweise jede der elektrischen Leitungen des Ladeanschlusskabels einen jeweiligen Anschlusskontakt aufweist, der an den Kommunikationsadapter angeschlossen sein kann. In diesem Fall hat das Ladeanschlusskabel natürlich einen entsprechenden komplementären Steckverbinder, der ausgebildet ist, mit dem Steckverbinder des Kraftfahrzeugs lösbar elektromechanisch gekoppelt zu werden. Natürlich kann auch ein unmittelbares Kontaktieren vorgesehen sein.

Mittels der Kommunikationsadapter, die vorzugsweise elektrisch mit den elektrischen Leitungen des Ladeanschlusskabels gekoppelt sind, um die Kommunikationsverbindung herzustellen, kann eine zuverlässige und weitgehend störsichere Kommunikationsverbindung hergestellt werden. Die im Stand der Technik übliche Pilotleitung kann daher vollständig eingespart werden. Durch geeignete Ausgestaltung der Kommunikationsadapter kann darüber hinaus die Kommunikationsreichweite nahezu beliebig verlängert werden. Dabei können die Kommunikationsadapter Leitungseigenschaften des Ladekabels berücksichtigen, so dass eine möglichst ungestörte zuverlässige Kommunikationsverbindung erreicht werden kann.

Das Übertragen von elektrischer Energie meint insbesondere ein Zuführen von elektrischer Energie nach Art eines Aufladevorgangs für den elektrischen Energiespeicher. Darüber hinaus soll vorzugsweise auch ein Abführen von elektrischer Energie nach Art eines Entladevorgangs aus dem elektrischen Energiespeicher hierunter verstanden werden können.

Es wird ferner vorgeschlagen, dass die Ladeeinheit zum Erhalten von elektrischer Energie an eine ladestationsexterne Energiequelle angeschlossen ist und einen Energiewandler, insbesondere einen getakteten Energiewandler, zum Wandeln der von der Energiequelle erhaltenen elektrischen Energie aufweist. Dies hat den Vorteil, dass ein entsprechender etwaiger Energiewandler kraftfahrzeugseitig eingespart werden kann, wodurch Aufwand und Gewicht kraftfahrzeugseitig eingespart werden können. Darüber hinaus kann erreicht werden, dass der Energiewandler effizienter genutzt werden kann, als es bei einer Anordnung im Kraftfahrzeug möglich ist, weil der Energiewandler während des Zuführens von elektrischer Energie zu mehreren unterschiedlichen Kraftfahrzeugen genutzt werden kann. Andernfalls wäre der Energiewandler lediglich für ein einziges Kraftfahrzeug nutzbar, und zwar das, in dem er angeordnet ist.

Der Energiewandler kann beispielsweise als DC/DC-Wandler ausgebildet sein. Darüber hinaus kann der Energiewandler auch lediglich durch einen Gleichrichter gebildet sein, beispielsweise einen Brückengleichrichter oder dergleichen. Dem Grunde nach kann natürlich auch ein Einweg- oder Zweiweggleichrichter zum Einsatz kommen, jedoch erweisen sich diese Schaltungstopologien aus Gründen der Effizienz in der Regel im Bereich der Energietechnik als weniger sinnvoll im Vergleich zu einem Brückengleichrichter. Auch Kombinationsschaltungen von Gleichrichtern mit DC/DC-Wandlern oder dergleichen können als Energiewandler vorgesehen sein. Darüber hinaus kann der Energiewandler natürlich auch einen oder mehrere Wechselrichter oder dergleichen umfassen.

Um die Zuverlässigkeit und/oder die Reichweite der Kommunikation weiter zu verbessern, kann darüber hinaus vorgesehen sein, dass der Energiewandler Mittel zum Reduzieren einer elektromagnetischen Kopplung zwischen der Energiequelle und dem Ladeanschlusskabel aufweist. Häufig basiert diese Kopplung zum Beispiel auf leitungsgebundenen Kopplungen oder dergleichen. Die Mittel zum Reduzieren der elektromagnetischen Kopplung können dann zum Beispiel ein geeignetes Filter, beispielsweise ein Funkenstörfilter oder dergleichen sein.

Das Reduzieren der Kopplung kann darüber hinaus auch durch weitere schaltungstechnische Maßnahmen erreicht werden, beispielsweise bei einem DC/DC-Wandler durch Vorsehen einer galvanischen Trennung oder dergleichen. Diese Maßnahmen können natürlich auch kraftfahrzeugseitig vorgesehen sein, beispielsweise zwischen dem Ladesteckverbinder des Kraftfahrzeugs, an dem auch der Kommunikationsadapter des Kraftfahrzeugs angeschlossen ist und weiteren Komponenten des Bordnetzes beziehungsweise des elektrischen Energiespeichers. Diese Maßnahmen können natürlich auch kombiniert sowohl ladestationsseitig als auch kraftfahrzeugseitig vorgesehen sein.

Gemäß einer Weiterbildung wird vorgeschlagen, dass der Energiewandler Mittel zum Reduzieren einer kapazitiven und/oder induktiven Kopplung zwischen der Energiequelle und dem Ladenschlusskabel aufweist. Auch hierdurch kann die Kommunikationsverbindung hinsichtlich ihrer Qualität weiter verbessert werden. Durch eine reduzierte kapazitive Kopplung kann zum Beispiel eine Dämpfung von durch die Kommunikationsadapter auf die elektrischen Leitungen eingespeisten Kommunikationssignalen reduziert werden. Je nach Anwendungsfall, insbesondere wenn Kommunikationssignale mit einer kleinen Trägerfrequenz genutzt werden, kann dies auch für eine induktive Kopplung relevant sein. Entsprechende Maßnahmen können ladestationsseitig vorgesehen sein. Beispielsweise kann vorgesehen sein, dass ladestationsseitig die Energiequelle von dem Ladeanschlusskabel galvanisch getrennt ist. Besonders vorteilhaft erweist es sich dabei, wenn die galvanische Trennung aufgrund ihrer Eigenschaften eine besonders geringe kapazitive Kopplung bereitstellt, beispielsweise aufgrund einer geeignet ausgebildeten Abschirmung und/oder dergleichen.

Ferner wird vorgeschlagen, dass der Kommunikationsadapter ausgebildet ist, eine an Leitungseigenschaften des Ladekabels angepasste Modulation zu nutzen. Diese Weiterbildung berücksichtigt, dass das Ladekabel insbesondere bei hohen Frequenzen spezifische Leitungseigenschaften aufweisen kann, beispielsweise einen Wellenwiderstand, Reflexionseigenschaften an den Enden des Ladeanschlusskabels und/oder dergleichen. Die Modulation meint dabei den in der Nachrichtentechnik üblichen Vorgang, bei dem ein zu übertragendes Nutzsignal ein sogenanntes Trägersignal verändert beziehungsweise moduliert. Üblicherweise weist das Trägersignal eine deutlich höhere Frequenz als die größte Frequenz des zu übertragenden Nutzsignals auf. Zum Senden der Kommunikationssignale weisen die Kommunikationsadapter deshalb einen so genannten Modulator auf, der die entsprechende Modulation durchführt. Darüber hinaus werden von den Kommunikationsadaptern empfangene Signale mittels geeigneter Demodulatoren demoduliert, sodass das jeweilige Nutzsignal wieder zurückgewonnen werden kann. Mittels des Trägersignals und der Modulation kann somit eine Anpassung an die physikalischen Eigenschaften des Ladeanschlusskabels erfolgen. Modulationsverfahren, sowohl analoge als auch digitale Modulationsverfahren sind im Stand der Technik umfänglich bekannt, weshalb diesbezüglich auf den Stand der Technik verwiesen wird.

Besonders vorteilhaft erweist es sich, eine digitale Modulation vorzusehen, zu welchem Zweck vorgeschlagen wird, dass der Kommunikationsadapter ausgebildet ist, eine digitale Kommunikation auf Basis eines gesicherten Protokoll-Standards zu nutzen. Ein entsprechender Protokoll-Standard kann zum Beispiel vorsehen, dass bestimmte Datenelemente beziehungsweise Datensätze genutzt werden, um die Kommunikationsverbindung herzustellen. Die Datenelemente können eine vorgegebene spezifische Datenstruktur aufweisen, die vorzugsweise zusätzliche Sicherheitsfunktionen erlaubt. So kann zum Beispiel vorgesehen sein, dass Identifikationsdaten von der Ladestation beziehungsweise dem Ladeabgang und/oder dem Kraftfahrzeug ausgetauscht werden. Vorzugsweise sind diese Daten in jedem Datenelement enthalten, sodass sowohl kraftfahrzeugseitig als auch ladestationsseitig beziehungsweise ladeabgangsseitig festgestellt werden kann, ob das Datenelement für die Ladestation beziehungsweise den Ladeabgang beziehungsweise das Kraftfahrzeug relevant ist. Dadurch kann vermieden werden, dass Datenelemente, die aufgrund von unerwünschten Wirkungen die Ladestation beziehungsweise das Kraftfahrzeug erreichen und die nicht an diese Ladestation beziehungsweise dieses Kraftfahrzeug gerichtet sind, von der Ladestation beziehungsweise dem Kraftfahrzeug als irrelevant erkannt werden können. Dies erhöht die Sicherheit, weil dadurch Energiespeicherdaten, die für den Ladevorgang relevant sein können, nicht fälschlicherweise als für den eigenen Ladevorgang erkannt werden und dadurch zu unerwünschten Funktionsstörungen in Bezug auf den Ladevorgang führen können. Dadurch kann die Zuverlässigkeit der Kommunikationsverbindung deutlich erhöht werden.

Darüber hinaus erlaubt es diese Ausgestaltung, zusätzliche Sicherheitsmerkmale vorzusehen, beispielsweise eine fehlertolerante Codierung zu nutzen, eine Verschlüsselung und/oder Identifikationsdaten vorzusehen und/oder dergleichen. Dies kann darüber hinaus verhindern, dass unberechtigte Dritte in den Ladevorgang eingreifen können. Beispielsweise können hierzu Protokoll-Standards genutzt werden, die zum Beispiel auf Protokoll-Standards basieren, wie sie bei Ethernet oder dergleichen zum Einsatz kommen.

Darüber hinaus wird vorgeschlagen, dass der Protokoll-Standard eine Überwachungszeit nutzt, um die Kommunikationsverbindung zu überwachen. Die Überwachungszeit kann dazu dienen, festzustellen, ob die Kommunikationsverbindung zwischen der Ladestation beziehungsweise dem Ladeabgang und dem Kraftfahrzeug besteht. Ist die Kommunikationsverbindung unterbrochen, kann dies ein unerwünschter Zustand sein und der Ladevorgang kann ladestationsseitig abgebrochen beziehungsweise unterbrochen werden. Dies erhöht die Sicherheit, insbesondere wenn beispielsweise die Steckverbindung des Ladeanschlusskabels am Steckverbinder des Kraftfahrzeugs in unerwünschter Weise gelöst wird oder dergleichen. Dies kann ladestationsseitig erkannt werden und es kann die Ladespannung abgeschaltet werden. Insgesamt kann die Sicherheit hierdurch verbessert werden.

Besonders vorteilhaft erweist es sich, wenn die Überwachungszeit kleiner als 20ms ist. Bei einer derart klein gewählten Überwachungszeit kann einerseits eine hohe Sicherheit gewährleistet werden, andererseits kann eine Beeinträchtigung des Ladevorgangs vergleichsweise schnell erkannt werden. Dadurch ist es möglich, eine hohe Sicherheit durch eine schnelle Reaktion zu erreichen, zugleich jedoch die Zuverlässigkeit des bestimmungsgemäßen Zuführens von elektrischer Energie im bestimmungsgemäßen Aufladevorgang möglichst ungestört durchführen zu können. Selbst wenn einzelne Datenelemente in der Kommunikationsverbindung verloren gehen sollten, oder zusätzliche Bearbeitungszeit an den Kommunikationsadaptern erforderlich sein sollte, braucht es hier nicht zu Time out-Fehlern zu kommen und folglich braucht auch keine unerwünschte Unterbrechung des Zuführens von elektrischer Energie die Folge zu sein.

Zumindest für den ladestationsseitigen Kommunikationsadapter kann vorgesehen sein, dass dieser entfernt von der Steuereinheit angeordnet ist. Der Kommunikationsadapter braucht also nicht in einem Gehäuse der Steuereinheit angeordnet zu sein. Vielmehr kann er ein eigenes Gehäuse aufweisen und leitungsgebunden und/oder drahtlos mit der Steuereinheit kommunikationstechnisch gekoppelt sein. Dadurch kann eine große Flexibilität bei der Realisierung der Erfindung erreicht werden. Der Kommunikationsadapter kann zum Beispiel auch beim Ladeabgang angeordnet sein.

Die Funktionalitäten für den ladestationsseitigen Kommunikationsadapter können natürlich zumindest teilweise auch für den kraftfahrzeugseitigen Kommunikationsadapter vorgesehen sein. Dem Grunde nach können die Kommunikationsadapter also auch identisch ausgebildet sein.

Es wird ferner vorgeschlagen, dass eine Funktionsbereitschaft der Ladestation angezeigt wird, wenn das Kraftfahrzeug mit der Ladestation elektrisch gekoppelt ist. Hierdurch kann zum Beispiel an das Kraftfahrzeug übermittelt werden, dass die Ladestation oder auch der Ladeabgang bereit ist, elektrische Energie zuzuführen oder auch aufzunehmen. Dies kann es der Fahrzeugsteuerung ermöglichen, den Vorgang der Energieübertragung zu steuern. Natürlich kann hiermit auch anzeigt werden, dass das Kraftfahrzeug mit der Ladestation bestimmungsgemäß gekoppelt ist, sodass ein Nutzer den Vorgang der Energieübertragung zu starten vermag. Auch weitere Nutzungsmöglichkeiten können hiermit eröffnet werden.

Darüber hinaus wird vorgeschlagen, dass durch die Ladestation eine Funktionalität eines Schutzleiters getestet wird. Hierdurch kann die Ladestation eine Sicherheitsfunktionalität prüfen, insbesondere in Bezug auf die elektrische Sicherheit. Dadurch besteht die Möglichkeit, dass das Übertragen der elektrischen Energie erst dann erfolgt, wenn die Sicherheit zuverlässig gewährleistet ist.

Eine Weiterbildung sieht vor, dass durch das Kraftfahrzeug eine Ladefreigabe angefordert wird. Durch die Ladefreigabe kann der Fahrzeugsteuerung mitgeteilt werden, dass das Übertragen von Energie gestartet werden kann. Dies kann zum Beispiel fahrzeugseitig signalisiert werden. Insbesondere kann die Aufnahme eines Fahrbetriebs des Kraftfahrzeugs verhindert werden.

Es wird weiterhin vorgeschlagen, dass durch das Kraftfahrzeug eine Lüftung angefordert wird. Hierdurch kann erreicht werden, dass der Vorgang der Energieübertragung verbessert werden kann. Durch das Anfordern der Lüftung kann eine Kühlungsfunktionalität bereitgestellt werden, die es erlaubt, den Vorgang der Energieübertragung aufrechtzuerhalten oder eine übertragene Leistung zu erhöhen. Dabei kann berücksichtigt werden, dass während des Vorgangs der Energieübertragung Verluste auftreten können, zum Beispiel beim Aufladen des elektrischen Energiespeichers.

Gemäß einer Weiterbildung kann vorgesehen sein, dass durch die Ladestation eine maximale Leistung an das Kraftfahrzeug übermittelt wird. Dadurch kann der Ladestation die Information bereitgestellt werden, mit welcher maximalen Leistung das Kraftfahrzeug beaufschlagt werden darf. Dies kann also einerseits als Sicherheitsfunktion dienen und andrerseits der Ladestation ermöglichen, immer einen möglichst optimalen Vorgang der Energieübertragung fahrzeugspezifisch bereitzustellen.

Darüber hinaus gelten die für die Steuereinheit und die Ladestation angegebenen Vorteile und Wirkungen natürlich gleichermaßen auch für einen Ladeabgang der Ladestation sowie für das Kraftfahrzeug oder das Verfahren der Erfindung und umgekehrt. Insbesondere können für Vorrichtungsmerkmale somit auch Verfahrensmerkmale und umgekehrt formuliert sein.

Weitere Vorteile und Merkmale ergeben sich aus der folgenden Beschreibung von Ausführungsbeispielen anhand der beigefügten Figuren. In den Figuren bezeichnen gleiche Bezugszeichen gleiche Merkmale und Funktionen. Es zeigen:
- FIG 1: in einer schematischen Darstellung eine Ladestation, an der ein Kraftfahrzeug zum Zuführen von elektrischer Energie von der Ladestation zum Kraftfahrzeug angeschlossen ist,
- FIG 2: eine schematische Diagrammdarstellung eines Datentelegramms mit Datenelementen als Kommunikationssignal, wie es für die Kommunikation über das zwei elektrische Leitungen aufweisende Ladeanschlusskabel gemäß FIG 1 mittels jeweiliger ladestationsseitiger und kraftfahrzeugseitiger Kommunikationsadapter genutzt wird, und
- FIG 3: eine schematische Diagrammdarstellung für ein Datenelement des Datentelegramms gemäß FIG 2.

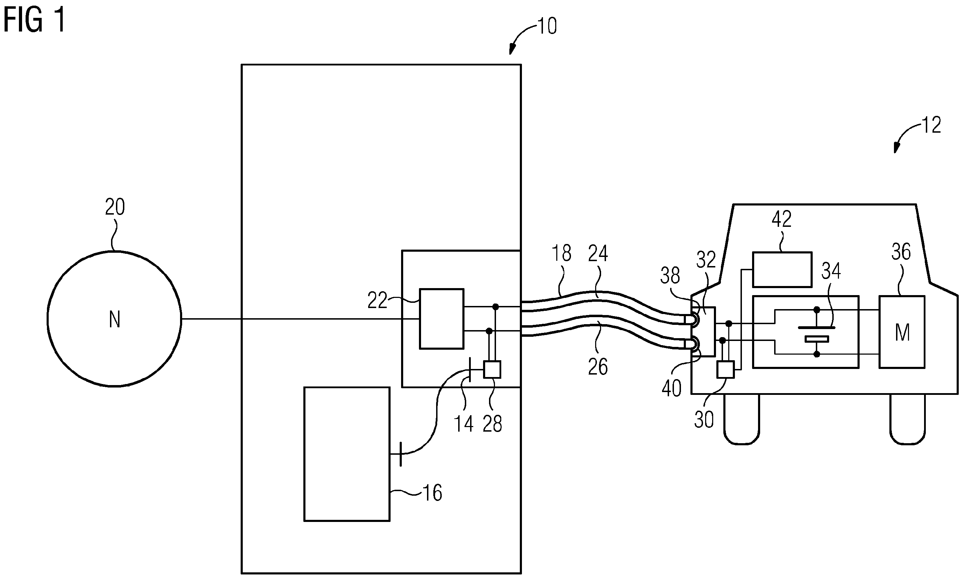

FIG 1 zeigt in einer schematischen Darstellung eine Ladestation 10 zum Zuführen von elektrischer Energie zu einem mit der Ladestation 10 elektrisch gekoppelten Kraftfahrzeug 12, welches vorliegend ein Elektrofahrzeug ist. Das Kraftfahrzeug 12 kann jedoch dem Grunde nach auch ein Hybridfahrzeug oder ein konventionelles Kraftfahrzeug sein.

Die Ladestation 10 weist eine Ladeeinheit 14 auf, die dazu dient, die elektrische Energie für das Kraftfahrzeug 12 bereitzustellen. Zu diesem Zweck ist die Ladeeinheit 14 zum Erhalten von elektrischer Energie an eine ladestationsexterne Energiequelle 20, hier ein öffentliches Energieversorgungsnetz, angeschlossen, welches die elektrische Energie unter Nutzung einer elektrischen Wechselspannung bereitstellt. Die Ladeeinheit 14 weist vorliegend ferner einen Energiewandler 22 auf, der zum Wandeln der von der Energiequelle 20 erhaltenen elektrischen Energie dient. Zu diesem Zweck ist der Energiewandler 22 vorliegend mit einer Gleichrichterfunktion und einem DC/DC-Wandler ausgebildet.

Die Ladestation 10 umfasst ferner eine mit der Ladeeinheit 14 kommunikationstechnisch gekoppelte Steuereinheit 16, die dazu ausgebildet ist, eine Kommunikationsverbindung zum Kraftfahrzeug 12 herzustellen und das Zuführen von elektrischer Energie abhängig von empfangenen Energiespeicherdaten des Kraftfahrzeugs einzustellen. Zu diesem Zweck kann mittels der Steuereinheit 16 der Energiewandler 22 in geeigneter Weise gesteuert werden.

Ferner umfasst die Ladestation 10 ein mit der Ladeeinheit 14 elektrisch gekoppeltes elektrisches Ladeanschlusskabel 18, das vorliegend genau zwei elektrische Leitungen 24, 26 zum Bereitstellen einer elektrischen Ladespannung aufweist, die vorliegend eine Gleichspannung ist.

Weiterhin umfasst die Steuereinheit 16 einen mit der Steuereinheit 16 kommunikationstechnisch gekoppelten und an die wenigstens zwei elektrischen Leitungen 24, 26 angeschlossenen Kommunikationsadapter 28 zum Herstellen der Kommunikationsverbindung zum Kraftfahrzeug 12 über die zwei elektrischen Leitungen 24, 26.

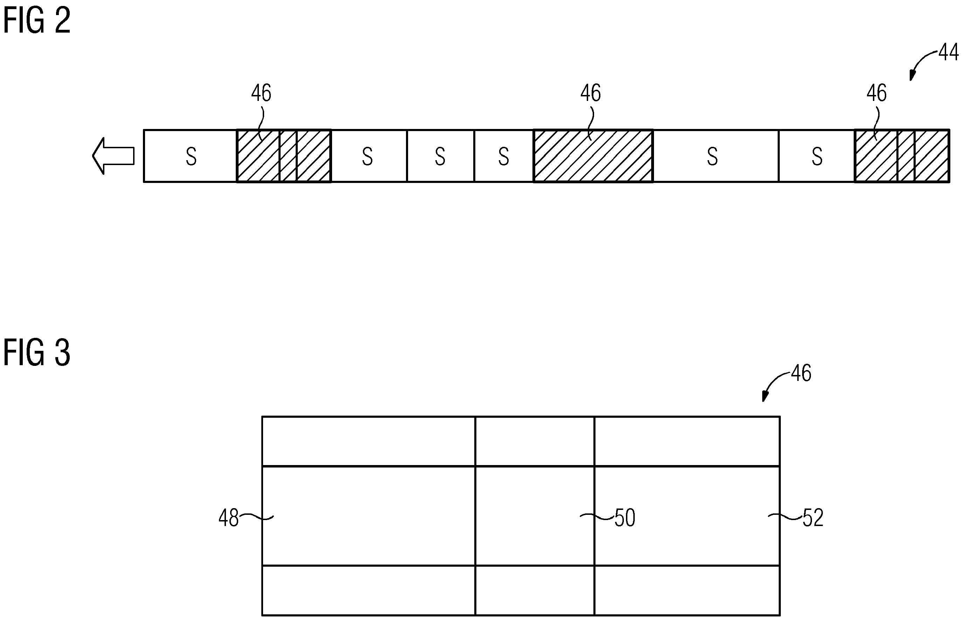

Der Kommunikationsadapter 28 ist ausgebildet, eine an Leitungseigenschaften des Ladeanschlusskabels 18 angepasste Modulation zu nutzen, zu welchem Zweck er einen entsprechend ausgebildeten, nicht dargestellten Modulator aufweist, mittels dem entsprechend modulierte Kommunikationssignale auf die beiden elektrischen Leitungen 24, 26 aufgegeben werden können. Darüber hinaus umfasst der Kommunikationsadapter 28 einen an das Modulationsverfahren angepassten Demodulator, mittels dem empfangene Kommunikationssignale demoduliert werden können. Die Kommunikationssignale können insbesondere ein Datentelegramm 44 mit Datenelementen 46 umfassen, wie im Folgenden noch anhand von FIG 2 weiter erläutert wird.

Vorliegend wird eine QAM-Modulation genutzt. Es können jedoch auch geeignete andere Modulationsverfahren zum Einsatz kommen.

Die Ladestation 10 ist vorliegend als Ladesäule an einem Abstellplatz für das Kraftfahrzeug 12 aufgestellt, sodass das auf dem Abstellplatz abgestellte Kraftfahrzeug 12 mittels des Ladeanschlusskabels 18 energietechnisch, das heißt, insbesondere elektrisch mit der Ladestation 10 gekoppelt werden kann, sodass die Ladestation 10 elektrische Energie zum Kraftfahrzeug 12 zuführen kann.

Aus FIG 1 ist ferner ersichtlich, dass das Kraftfahrzeug 12 mittels des Ladeanschlusskabels 18 an die Ladestation 10 angeschlossen ist. Zu diesem Zweck weist das Kraftfahrzeug 12 eine Ladeanschlusseinheit 32 mit vorliegend zwei Anschlusskontakten 38, 40 auf, wobei die Ladeanschlusseinheit 32 zum elektrischen Anschließen des elektrischen Ladeanschlusskabels 18 der Ladestation 10 mit den zwei elektrischen Leitungen 24, 26 zum Bereitstellen der elektrischen Ladespannung ausgebildet ist.

Darüber hinaus weist das Kraftfahrzeug 12 eine elektrische Antriebseinrichtung 36 zum Antreiben des Kraftfahrzeugs 12 in einem bestimmungsgemäßen Fahrbetrieb und einen mit der Antriebseinrichtung 36 elektrisch gekoppelten elektrischen Energiespeicher 34 auf, der vorliegend als Lithium-Ionen-Akkumulator ausgebildet ist. Eine Bemessungsspannung des elektrischen Energiespeichers 34 beträgt vorliegend etwa 450 V. Bei dieser Spannung handelt es sich um eine Hochvoltspannung im Sinne der Normung, beispielsweise der Norm ECE R 100. Beim Betrieb von elektrischen Anlagen mit Hochspannung sind bestimmte Normerfordernisse zu erfüllen. Sowohl die Ladestation 10 als auch das Kraftfahrzeug 12 sind hierfür entsprechend ausgebildet.

Mit dem Energiespeicher 34 ist ferner die Ladeanschlusseinheit 32 elektrisch gekoppelt. Hierzu ist ein jeweiliger Anschlusspol des Energiespeichers 34 mit einem jeweiligen der Anschlusskontakte 38, 40 der Ladeanschlusseinheit 32 elektrisch gekoppelt, sodass dem Energiespeicher 34 bei einem Anschluss des Kraftfahrzeugs 12 an die Ladestation 10, wie in FIG 1 dargestellt, elektrische Energie zugeführt werden kann. Dem Grunde nach besteht aber auch die Möglichkeit, dem Energiespeicher 34 auf diesem Wege elektrische Energie zu entnehmen.

Das Kraftfahrzeug 12 weist ferner eine Fahrzeugsteuereinheit 42 auf, die kommunikationstechnisch mit nicht weiter dargestellten Sensoren gekoppelt ist, mittels denen Zustandsgrößen und/oder Parameter des dem elektrischen Energiespeichers 34 erfasst werden können. Vorliegend umfassen die Zustandsgrößen einen Ladungszustand und eine Temperatur des Energiespeichers 34. Als Parameter werden eine elektrische Bemessungsspannung und eine Ladeleistung des Energiespeichers 34 erfasst. Die Fahrzeugsteuereinheit 42 ist ausgebildet, eine Kommunikationsverbindung zur Ladestation 10 herzustellen und Energiespeicherdaten über die Kommunikationsverbindung an die Ladestation 10 zu übermitteln, um das Zuführen oder gegebenenfalls auch ein Entnehmen von elektrischer Energie abhängig von den Energiespeicherdaten einzustellen.

Vorliegend umfassen die Energiespeicherdaten einen Ladungszustand, eine Temperatur und eine Bemessungsleistung sowie eine Bemessungsspannung des elektrischen Energiespeichers 34. Darüber hinaus können bedarfsweise jedoch weitere Zustandsdaten des elektrischen Energiespeichers 34 hinzugefügt werden oder auch einige von den zuvor genannten Energiespeicherdaten weggelassen werden, wenn dies für die aktuelle Anwendung zweckmäßig beziehungsweise sinnvoll ist.

Ferner umfasst das Kraftfahrzeug 12 einen mit der Fahrzeugsteuereinheit 42 kommunikationstechnisch gekoppelten und an die zwei Anschlusskontakte 38, 40 angeschlossenen Kommunikationsadapter 30 zum Herstellen der Kommunikationsverbindung zur Ladestation 10 über die zwei elektrischen Leitungen 24, 26 des Ladeanschlusskabels 18.

Der Kommunikationsadapter 30 ist im Wesentlichen gleich wie der Kommunikationsadapter 28 der Ladestation 10 ausgebildet. Je nach Bedarf kann der Kommunikationsadapter 30 jedoch auch abweichend hiervon ausgebildet sein, um zum Beispiel kraftfahrzeugspezifische Eigenschaften berücksichtigen zu können. Sowohl der Kommunikationsadapter 28 als auch der Kommunikationsadapter 30 sind ausgebildet, eine galvanische Trennung zwischen der Kommunikationsverbindung zur Steuereinheit 16 beziehungsweise Fahrzeugsteuereinheit 42 und den elektrischen Leitungen 24, 26 herzustellen. Die Kommunikationsadapter 28, 30 können zu diesem Zweck geeignete Übertrager aufweisen, die es erlauben, ein Kommunikationssignal auf die elektrischen Leitungen 24, 26 zu geben, ohne eine galvanische Verbindung beziehungsweise eine elektrisch leitende Verbindung herstellen zu müssen. Zu diesem Zweck kann vorgesehen sein, dass die Kommunikationsadapter 28, 30 eine vorgegebene Modulation nutzen.

Über den gleichen kommunikationstechnischen Kopplungsweg können natürlich auch Kommunikationssignale durch die Kommunikationsadapter 28, 30 empfangen werden. Empfangene Kommunikationssignale können mittels der Demodulatoren demoduliert und gegebenenfalls auch decodiert und falls erforderlich auch entschlüsselt werden. Infolgedessen kann zum Senden vorgesehen sein, dass die Kommunikationsadapter 28, 30 einen jeweiligen entsprechenden Codierer und gegebenenfalls auch einen jeweiligen entsprechenden Verschlüsseler umfassen, um die zu übertragenden Daten in geeigneter Weise für die Kommunikationsverbindung bereitstellen zu können.

Als Modulation können unterschiedlichste Modulationsverfahren dem Grunde nach vorgesehen sein, so zum Beispiel Amplitudenmodulation, Frequenzmodulation, Kombinationen hiervon, digitale Modulationen und/oder dergleichen.

Um die Kommunikation auf den elektrischen Leitungen 24, 26 zu verbessern, ist vorliegend vorgesehen, dass der Energiewandler 22 eine galvanische Trennung bereitstellt. Die Leitungen 24, 26 sind somit gegenüber einem nicht dargestellten Erdpotential elektrisch getrennt. Hierdurch kann eine unerwünschte kapazitive Kopplung reduziert werden, die die Kommunikation über die elektrischen Leitungen 24, 26 beeinträchtigen könnte.

Ferner ist vorliegend vorgesehen, dass die Kommunikationsadapter 28, 30 ausgebildet sind, eine digitale Kommunikation auf Basis eines gesicherten Protokoll-Standards zu nutzen. Dies wird im Folgenden anhand von FIG 2 und 3 weiter erläutert, welche als Kommunikationssignal eine schematische Darstellung eines Datentelegramms 44 mit Datenelementen 46 zeigen, das von den Kommunikationsadaptern 28, 30 zur Kommunikation über die elektrischen Leitungen 24, 26 untereinander genutzt werden kann.

Damit auch ohne das Erfordernis der Pilotleitung eine Betriebssicherheit in Bezug auf die Kommunikation während des Aufladens beziehungsweise während des Zuführens von elektrischer Energie von der Ladestation zum Kraftfahrzeug gewährleistet werden kann, ist vorzugsweise eine Assoziierung der Ladestation 10 zum Kraftfahrzeug 12 sicherzustellen. Darüber hinaus sollte eine Signalisierung zumindest des Ladezustands vorzugsweise unter mit einer Unterbrechung des Zuführens der elektrischen Energie bei einem Fehler oder beim Lösen des Ladeanschlusskabels 18 von der Ladeanschlusseinheit 32 ermöglicht werden. Ferner soll das Übersprechen nicht nur beherrscht werden können, sondern vorzugsweise zumindest deutlich reduziert werden können. Dadurch kann auch eine Latenz bei der Kommunikation über die Kommunikationsverbindung reduziert und eine tatsächlich zur Verfügung stehende Bandbreite bei der Kommunikation erhöht werden.

Dabei kann die sichere Assoziierung zwischen der Ladestation 10 und dem Kraftfahrzeug 12 dadurch erreicht werden, dass die Kommunikationssignale nicht mehr erdbezogen unter Nutzung der Pilotleitung, sondern auf beliebige elektrische Leitungen des Ladeanschlusskabels 18 aufgegeben werden, vorliegend auf die elektrischen Leitungen 24, 26. Erfolgt das Laden mittels einer Ladespannung die eine Gleichspannung ist, können hierzu eine Plus-Leitung und eine entsprechend zugehörige Minus-Leitung benutzt werden. Beim Nutzen einer Ladespannung, die eine einphasige Wechselspannung ist, kann dies eine Phasen-Leistung und eine zugehörige Null-Leitung sein. Wird eine mehrphasige, beispielsweise dreiphasige, Wechselspannung als Ladespannung genutzt, kann vorgesehen sein, dass die Kommunikation über wenigstens zwei Phasen-Leitungen erfolgt. Eine Erdleitung braucht deshalb für die Kommunikation nicht benutzt zu werden.

Eine Dämpfung des Übersprechens kann dadurch reduziert werden, dass im Fall eines Ladens mit einer Gleichspannung ein Energiewandler beziehungsweise ein Umrichter oder auch eine Stromquelle mit einer geringen Koppelkapazität zwischen einer Wechselspannungsseite der Energiequelle 20 und einer Gleichspannungsseite, hier des Ladeanschlusskabels 18, realisiert wird, zum Beispiel in dem vor Beginn des Startens des Ladevorgangs beziehungsweise des Zuführens von elektrischer Energie die Verbindung des Ladeanschlusskabels 18 mit der Energiequelle 20 ohnehin durch ein nicht dargestelltes Schütz getrennt ist. Wird eine Wechselspannung als Ladespannung genutzt, kann in eine Zuführung zum Ladeanschlusskabel 18 eine Hochfrequenz-Filterung vorgesehen werden, beispielsweise an einer Energiezuführung beziehungsweise einen Anschluss für die ladestationsexterne Energiequelle 20 oder dergleichen.

Die Hochfrequenz-Filterung kann zum Beispiel ein Filter für leitungsgebundene Funkstörungen umfassen. Dadurch kann ein Assoziierungsmechanismus, beispielsweise Session Layer Attenuation Characterization (SLAC) aufgrund der geringeren Dämpfung eindeutigere Ergebnisse liefern.

Die sichere Übermittlung von Ladungszuständen des elektrischen Energiespeichers 34 kann durch Anwenden von Mechanismen in der Automatisierungstechnik erreicht werden, bei denen die entsprechenden Zustandsdaten, wie im Folgenden noch anhand von FIG 2 und 3 weiter erläutert wird, übertragen werden.

FIG 2 zeigt in einer schematischen Darstellung ein Datentelegramm 44, wie er zur Herstellung der Kommunikationsverbindung zwischen den Kommunikationsadaptern 28, 30 über die elektrischen Leitungen 24, 26 zum Einsatz kommen kann. Das Datentelegramm 44 umfasst hier eine Abfolge von mehreren Datenstromsegmenten S, die Standarddaten umfassen, inklusive Sicherheitsprozessdateneinheiten (Englisch: protocol data unit, PDU), die der gesicherten Kommunikation über die elektrischen Leitungen 24, 26 dienen. Mehrere aufeinanderfolgende der Datenstromabschnitte S trennen Datenelemente 46, die in ihrer Struktur in FIG 3 schematisch dargestellt sind.

Vorliegend ist ein kontinuierlicher Datenstrom vorgesehen, der bidirektional erfolgt. Aufgrund der gewählten Modulation kann die bidirektionale Kommunikationsverbindung zeitgleich hergestellt werden, sodass eine Vollduplex-Kommunikationsverbindung zur Verfügung steht.

FIG 3 zeigt in der schematischen Darstellung eines der Datenelemente 46 gemäß FIG 2, bei welchem Zustandsinformationen des elektrischen Energiespeichers 34 als F-Input/Output-Daten 48 übermittelt werden können. Die F-Input/Output-Daten 48 können zum Beispiel bis zu 123 Bytes umfassen. Ein Status- /Kontrolldatum 50 folgt den F-Input/Output-Daten 48 unmittelbar. Dieses kann ein Byte Daten umfassen.

Unmittelbar anschließend können Fehlerkorrekturdaten wie zum Beispiel Fehlerkorrektur-Bytes 52 folgen, die beispielsweise drei oder auch vier Bytes umfassen können. Mittels der Fehlerkorrektur-Bytes 52 kann eine fehlertolerante Codierung der Daten erreicht werden, sodass bei Empfang des Datenelements 46 empfangsseitig geprüft werden kann, ob die F-Input/Output-Daten 48 verfälscht sind oder nicht. Darüber hinaus kann auch eine gewisse Anzahl von Fehlern korrigiert werden.

Dies ermöglicht es, eine hochgesicherte Kommunikationsverbindung zu erreichen. Darüber hinaus können die zu übertragenden Daten des Datentelegrams 46 natürlich auch zusätzlich verschlüsselt sein, um die Sicherheit, insbesondere in Bezug auf unzulässige Eingriffe in die Kommunikation besser zu schützen. Hierzu können entsprechende Verschlüsselungsalgorithmen vorgesehen sein.

Um eine hohe Sicherheit bezüglich der Kommunikationsverbindung erreichen zu können, kann eine Überwachungszeit vorgesehen sein, die vorliegend kleiner als etwa 20ms, beispielsweise etwa 16ms oder auch etwa 8ms oder auch weniger beträgt.

Nach Ablauf der Überwachungszeit kann ein Sicherheitsfehler erkannt werden und sicherheitskritische Einstellungen, beispielsweise die Energiezuführung von der Ladestation 10 zum Kraftfahrzeug 12, abgeschaltet werden. Die erfindungsgemäße Auslegung des Systems gewährleistet eine gute Verfügbarkeit in Bezug auf die zu übertragenden Daten.

Dadurch kann es bei Verlust einzelner Datenelemente zwar zu geringfügig erhöhter Übertragungslatenz und/oder zusätzlicher Verarbeitungszeit in den Kommunikationsadaptern 28, 13 kommen, jedoch können ein Time-Out-Fehler und ein daraus folgender Abbruch der Energiezuführung von der Ladestation 10 zum Kraftfahrzeug 12 weitgehend vermieden werden.

Zur weiteren Erhöhung der Sicherheit der Kommunikationsverbindung kann auch ein Stromsollwert für die Zuführung der elektrischen Energie von der Ladestation 10 zum Kraftfahrzeug 12 übertragen werden, vorzugsweise unter Nutzung der oben beschriebenen sicheren Kommunikation, beispielsweise im gleichen Datenelement 46 mit dem zuvor beschriebenen kurzen Zyklus. Im Gegensatz zu im Stand der Technik genutzten Zykluszeiten von zum Beispiel etwa 60s kann bei der Wahl der erfindungsgemäßen Zykluszeit eine sichere Direktverbindung als Kommunikationsverbindung zwischen der Ladestation 10 und dem Kraftfahrzeug 12 realisiert werden.

Das in FIG 2 dargestellte Datentelegramm 44 kann unter Nutzung von Framing realisiert werden, wie es beispielsweise aus Ethernet bekannt ist, realisiert werden, in dem zum Beispiel entsprechende Ethernet-Frames genutzt werden. Unter Berücksichtigung des OSI-Schichtmodells ist es mit der Erfindung möglich, einen Ausfall der Kommunikation aufgrund des Überschreitens der Überwachungszeit auf Schicht 7 erkennen zu können. Insgesamt ermöglicht es die Erfindung auch, die Reihenfolge der Datenelemente 46 überwachbar zu machen.

Insgesamt können die Kommunikation zwischen der Ladestation 10 und dem Kraftfahrzeug 12 und auch das Ladeanschlusskabel 18 vereinfacht werden. Die im Stand der Technik übliche Pilot-Leitung, die bei erdbezogener Kommunikation störanfällig ist, kann vollständig eingespart werden. Darüber hinaus erlaubt es die Erfindung, auch bestehende Kommunikationskonzepte basierend auf zum Beispiel Profinet/Profisafe zu nutzen beziehungsweise importieren und dadurch Simatic-kompatible Lösungen zu ermöglichen.

Insgesamt ist die Erfindung jedoch nicht auf das leitungsgebundene Laden beschränkt und kann dem Grunde nach auch bei einer drahtlosen energietechnischen Kopplung, zum Beispiel induktives Laden oder dergleichen, angewendet werden.

Die Beschreibung dient ausschließlich der Erläuterung der Erfindung und soll diese nicht beschränken.

## Patentansprüche

1. Steuereinheit (16) zum Steuern einer Ladeeinheit (14), die dem Übertragen von elektrischer Energie an ein mit der Ladeeinheit (14) über ein wenigstens zwei elektrische Leitungen (24, 26) aufweisendes Ladeanschlusskabel (18) koppelbares Kraftfahrzeug (12) dient, wobei die Steuereinheit (16) eine Kommunikationsschnittstelle zum kommunikationstechnischen Verbinden mit der Ladeeinheit (14) aufweist und ferner ausgebildet ist, eine Kommunikationsverbindung zum Kraftfahrzeug (12) herzustellen und das Übertragen von elektrischer Energie durch die Ladeeinheit (14) abhängig von empfangenen Energiespeicherdaten des Kraftfahrzeugs (12) einzustellen, **gekennzeichnet durch** einen an die wenigstens zwei elektrischen Leitungen (24, 26) anschließbaren Kommunikationsadapter (28) zum Herstellen der Kommunikationsverbindung zum Kraftfahrzeug (12) über die wenigstens zwei elektrischen Leitungen (24, 26) .

2. Steuereinheit nach Anspruch 1, **dadurch gekennzeichnet, dass** der Kommunikationsadapter (28) ausgebildet ist, eine an Leitungseigenschaften des Ladeanschlusskabels (18) angepasste Modulation zu nutzen.

3. Steuereinheit nach einem der vorhergehenden Ansprüche, **dadurch gekennzeichnet, dass** der Kommunikationsadapter (28) ausgebildet ist, eine digitale Kommunikation auf Basis eines gesicherten Protokoll-Standards zu nutzen.

4. Steuereinheit nach Anspruch 3, **dadurch gekennzeichnet, dass** der Protokoll-Standard eine Überwachungszeit nutzt, um die Kommunikationsverbindung zu überwachen.

5. Steuereinheit nach Anspruch 4, **dadurch gekennzeichnet, dass** die Überwachungszeit kleiner als 20 ms ist.

6. Steuereinheit nach einem der vorhergehenden Ansprüche, **dadurch gekennzeichnet, dass** der Kommunikationsadapter (28) räumlich entfernt von der Steuereinheit (16) angeordnet ist.

7. Ladestation (10) zum Übertragen von elektrischer Energie zwischen der Ladestation (10) und einem mit der Ladestation (10) elektrisch koppelbaren Kraftfahrzeug (12), mit:
- einer Ladeeinheit (14) zum Übertragen der elektrischen Energie,
- einer mit der Ladeeinheit (14) kommunikationstechnisch gekoppelten Steuereinheit (16), wobei die Steuereinheit (16) ausgebildet ist, eine Kommunikationsverbindung zum Kraftfahrzeug (12) herzustellen und das Übertragen von elektrischer Energie durch die Ladeeinheit (14) abhängig von empfangenen Energiespeicherdaten des Kraftfahrzeugs (12) einzustellen, und
- einem mit der Ladeeinheit (14) elektrisch gekoppelten elektrischen Ladeanschlusskabel (18), das wenigstens zwei elektrische Leitungen (24, 26) zum elektrischen Koppeln des Kraftfahrzeugs aufweist,
**dadurch gekennzeichnet, dass** die Steuereinheit (16) nach einem der vorhergehenden Ansprüche ausgebildet ist.

8. Ladestation nach Anspruch 7, **dadurch gekennzeichnet, dass** die Ladeeinheit (14) zum Erhalten von elektrischer Energie an eine ladestationsexterne Energiequelle (20) angeschlossen ist und einen Energiewandler (22), insbesondere einen getakteten Energiewandler, zum Wandeln der von der Energiequelle (20) erhaltenen elektrischen Energie aufweist.

9. Ladestation nach Anspruch 8, **dadurch gekennzeichnet, dass** der Energiewandler (22) Mittel zum Reduzieren einer elektromagnetischen Kopplung zwischen der Energiequelle und dem Ladekabel aufweist.

10. Ladestation nach Anspruch 8 oder 9, **dadurch gekennzeichnet, dass** der Energiewandler Mittel zum Reduzieren einer kapazitiven und/oder induktiven Kopplung zwischen der Energiequelle (20) und dem Ladeanschlusskabel (18) aufweist.

11. Ladeabgang für eine Ladestation (10), wobei der Ladeabgang räumlich entfernt von einer Ladeeinheit (14) der Ladestation (10) zum Übertragen der elektrischen Energie anordbar ist und zum elektrischen Koppeln eines Kraftfahrzeugs (12) ausgebildet ist, wobei der Ladeabgang aufweist:
- eine mit der Ladeeinheit (14) kommunikationstechnisch gekoppelte Steuereinheit (16), wobei die Steuereinheit (16) ausgebildet ist, eine Kommunikationsverbindung zum Kraftfahrzeug (12) herzustellen und das Übertragen von elektrischer Energie durch die Ladeeinheit (14) abhängig von empfangenen Energiespeicherdaten des Kraftfahrzeugs (12) einzustellen, und
- ein mit dem Ladeabgang gekoppeltes elektrisches Ladeanschlusskabel (18), das wenigstens zwei elektrische Leitungen (24, 26) zum elektrischen Koppeln des Kraftfahrzeugs aufweist,
**dadurch gekennzeichnet, dass**
die Steuereinheit (16) nach einem der Ansprüche 1 bis 6 ausgebildet ist.

12. Kraftfahrzeug (12) mit:
- einem elektrischen Energiespeicher (34),
- einer mit dem elektrischen Energiespeicher (34) elektrisch gekoppelten Ladeanschlusseinheit (32) mit wenigstens zwei Anschlusskontakten (38, 40), wobei die Ladeanschlusseinheit (32) zum elektrischen Anschließen eines elektrischen Ladeanschlusskabels (18) einer Ladestation (10) mit wenigstens zwei elektrischen Leitungen (24, 26) zum Übertragen von elektrischer Energie zwischen der Ladestation (10) und dem Kraftfahrzeug (12) ausgebildet ist, und
- einer Fahrzeugsteuereinheit (42), die ausgebildet ist, eine Kommunikationsverbindung zur Ladestation (10) herzustellen und Energiespeicherdaten des elektrischen Energiespeichers (34) über die Kommunikationsverbindung an die Ladestation (10) zu übermitteln, um das Übertragen der elektrischen Energie abhängig von den Energiespeicherdaten einzustellen, **gekennzeichnet durch**
- einen mit der Fahrzeugsteuereinheit (42) kommunikationstechnisch gekoppelten und an die wenigstens zwei Anschlusskontakte (38, 40) angeschlossenen Kommunikationsadapter (30) zum Herstellen der Kommunikationsverbindung zur Ladestation (10) über die wenigstens zwei elektrischen Leitungen (24, 26).

13. Ladestation (10) nach einem der Ansprüche 7 bis 10, an die ein Kraftfahrzeug (12) nach Anspruch 12 zum Übertragen von elektrischer Energie zwischen der Ladestation (10) und dem Kraftfahrzeug (12) elektrisch angeschlossen ist.

14. Verfahren zum Übertragen von elektrischer Energie zwischen einer Ladestation (10) und einem mit der Ladestation (10) elektrisch gekoppelten Kraftfahrzeug (12), wobei:
- das Kraftfahrzeug (12) mittels eines wenigstens zwei elektrische Leitungen (24, 26) aufweisenden elektrischen Ladeanschlusskabels (18) mit der Ladestation (10) gekoppelt wird,
- eine Kommunikationsverbindung zwischen der Ladestation (10) und dem Kraftfahrzeug (12) hergestellt wird, und
- das Übertragen der elektrischen Energie durch die Ladestation (10) abhängig von vom Kraftfahrzeug (12) an die Ladestation (10) übermittelten Energiespeicherdaten eingestellt wird,
**dadurch gekennzeichnet, dass** die Kommunikationsverbindung mittels wenigstens eines ladestationsseitigen und wenigstens eines kraftfahrzeugseitigen Kommunikationsadapters (28, 30) zumindest teilweise über die wenigstens zwei elektrischen Leitungen (24, 26) des elektrischen Ladeanschlusskabels (18) hergestellt wird.

15. Verfahren nach Anspruch 14, **dadurch gekennzeichnet, dass** eine Funktionsbereitschaft der Ladestation (10) angezeigt wird, wenn das Kraftfahrzeug (12) mit der Ladestation (10) elektrisch gekoppelt ist.

16. Verfahren nach Anspruch 14 oder 15, **dadurch gekennzeichnet, dass** durch die Ladestation (10) eine Funktionalität eines Schutzleiters getestet wird.

17. Verfahren nach einem der Ansprüche 14 bis 16, **dadurch gekennzeichnet, dass** durch das Kraftfahrzeug (12) eine Ladefreigabe angefordert wird.

18. Verfahren nach einem der Ansprüche 14 bis 17, **dadurch gekennzeichnet, dass** durch das Kraftfahrzeug (12) eine Lüftung angefordert wird.

19. Verfahren nach einem der Ansprüche 14 bis 18, **dadurch gekennzeichnet, dass** durch die Ladestation (10) eine maximale Leistung an das Kraftfahrzeug (12) übermittelt wird.
